# EUROPEAN PATENT APPLICATION

(11) **EP 4 811 726 A1**
(43) Date of publication of application: **23.09.2026**
(21) Application number: 26164196.3
(22) Date of filing: 12.03.2026
(51) Int. Cl.: H04L 9/40, G07C 9/00

(54) **AUTHENTICATION METHOD AND AUTHENTICATION SYSTEM**

(30) Priority: 17.03.2025 JP 2025042312
(71) Applicant: GLORY LTD., Himeji-shi Hyogo 670-8567 (JP)
(72) Inventor: KUMAGAI, Yoshiki, Himeji-shi Hyogo, 670-8567 (JP); YAMASHITA, Minami, Himeji-shi Hyogo, 670-8567 (JP); KANO, Aya, Himeji-shi Hyogo, 670-8567 (JP)
(74) Representative: SSM Sandmair

(57) **Abstract**

An authentication method performed by a management apparatus for a facility that restricts users to authority holders who have been granted a predetermined authority in advance, includes: storing identification information of a proxy authority holder in a memory, the identification information being assigned to a user who has been granted proxy authority to enter the facility as the proxy authority holder on behalf of the authority holder; storing authentication information issued to the proxy authority holder for entering the facility in association with the identification information in the memory; acquiring the authentication information from the proxy authority holder by an entry restriction device provided for restricting entry into the facility; performing an authentication process for the proxy authority holder, based on the authentication information acquired by the entry restriction device; and controlling the entry restriction device, based on a result of the authentication process.

## Description

### TECHNICAL FIELD

The present disclosure relates to an authentication method and an authentication system for authenticating a user of a facility.

### BACKGROUND ART

Conventionally, stores that differentiate customers by categorizing the customers into types, such as, store members and other customers, are known. For example, there is a store that accepts only cashless payments. In this store, a customer who can only make cash payments cannot purchase items sold in the store. Japanese Laid-Open Patent Publication No. 2021-26317 discloses a system in which a user who can make cashless payments grants partial payment authority to a user who cannot make cashless payments. In a store using this system, a customer, who can only make cash payments but is granted partial authority by another customer who can make cashless payments, uses the granted authority to purchase items sold in the store. For example, when a parent who is a store member of such a store asks the child to shop in the store, the parent can temporarily grant payment authority to the child, thereby enabling the child to purchase items in the store.

There are some membership-based stores that permit only store members to enter. In such stores, even when using the above-described conventional system, a person who is not a store member cannot enter the store to purchase items. For example, when an elderly person who is a store member wishes to ask someone else to shop on his or her behalf, the proxy user who is asked to make the purchase cannot enter the store. Therefore, an improvement in the convenience of stores such as membership-based stores that restrict entry of customers has been desired.

### SUMMARY

The present disclosure has been made in view of the problem, as well as other problems, of the conventional art, and the present disclosure addresses these issues, as discussed herein, with an authentication method and an authentication system for improving the convenience of a store that restricts entry of customers.

An authentication method according to one aspect of the present disclosure is performed by a management apparatus for a facility that restricts users to authority holders who have been granted a predetermined authority in advance. The authentication method includes: storing identification information of a proxy authority holder in a memory, the identification information being assigned to a user who has been granted proxy authority to enter the facility as the proxy authority holder on behalf of the authority holder; storing authentication information issued to the proxy authority holder for entering the facility in association with the identification information in the memory; acquiring the authentication information from the proxy authority holder by an entry restriction device provided for restricting entry into the facility; performing an authentication process for the proxy authority holder, based on the authentication information acquired by the entry restriction device; and controlling the entry restriction device, based on a result of the authentication process.

In the above configuration, the authentication method may further includes: storing a usage condition set by the authority holder for the proxy authority holder using the facility in association with the authentication information in the memory; and restricting use of the facility by the proxy authority holder, based on the usage condition.

In the above configuration, the authentication method may further include controlling the entry restriction device to restrict the entry of the proxy authority holder into the facility, based on information included in the usage condition for restricting a number of times that the proxy authority holder is allowed to enter the facility, and the authentication information acquired by the entry restriction device.

In the above configuration, the authentication method may further include controlling another entry restriction device to restrict an entry of the proxy authority holder into an area provided in the facility, based on information included in the usage condition for restricting an area into which the authority holder is allowed to enter among a plurality of areas provided in the facility, and the authentication information of the proxy authority holder acquired by the another restriction device that restricts entry into each area.

In the above configuration, the authentication method may further include controlling another entry restriction device to restrict an entry of the proxy authority holder into a store provided in the facility, based on information included in the usage condition for restricting a store into which the authority holder is allowed to enter among a plurality of stores provided in the facility, and the authentication information of the proxy authority holder acquired by the another entry restriction device.

In the above configuration, the authentication method may further include: acquiring information on an amount to be settled by the proxy authority holder from a checkout apparatus in the facility; determining whether or not the amount to be settled by the proxy authority holder meets a restriction on an amount set in the usage condition, based on information included in the usage condition for restricting an amount that the proxy authority holder is allowed to settle in the facility; and controlling the checkout apparatus, based on a result of the determination.

In the above configuration, the authentication method may further include: acquiring information on an item to be purchased by the proxy authority holder from a checkout apparatus in the facility; determining whether or not the item to be purchased by the proxy authority holder meets a restriction on an item set in the usage condition, based on information included in the usage condition for restricting items that the proxy authority holder is allowed to purchase in the facility; and controlling the checkout apparatus, based on a result of the determination.

An authentication system according to one aspect of the present disclosure is an authentication system that performs user authentication for a facility that restricts users to authority holders who have been granted a predetermined authority in advance. The authentication system includes: a memory configured to store identification information in association with authentication information, the identification information being assigned to a user who has been granted proxy authority to enter the facility as the proxy authority holder on behalf of the authority holder, the authentication information being issued to the proxy authority holder for entering the facility; and a control circuitry configured to perform an authentication process for the proxy authority holder, based on the authentication information acquired from the proxy authority holder by an entry restriction device provided for restricting entry into the facility, and to control the entry restriction device based on a result of the authentication process.

### BRIEF DESCRIPTION OF THE DRAWINGS

FIG. 1 is a schematic diagram illustrating an outline of an authentication method and an authentication system according to an embodiment of the present disclosure;
FIG. 2 shows an example of the configuration of the authentication system;
FIGS. 3A and 3B are flowcharts showing an example of the processing flow performed in the authentication system;
FIGS. 4A to 4C show examples of proxy information managed by the management apparatus;
FIG. 5 is a flowchart showing an example of the processing flow performed when a member grants proxy authority to a proxy user; and
FIG. 6 is a flowchart showing an example of the processing flow performed during a checkout process.

### DESCRIPTION OF EMBODIMENTS

Hereinafter, an authentication method and an authentication system according to the present disclosure will be described with reference to the accompanying drawings. According to one embodiment of the authentication method and the authentication system of the present disclosure, when a facility restricts entry into the facility to authorized persons, a user having temporary authority granted by an authorized person can be authenticated so that the user can enter the facility. The facility may be a commercial facility, such as a store, a shopping mall, or a department store. However, the facility is not limited to commercial facilities and may include other types of facilities acquiring access control, such as an office building, a factory, a hospital. Hereinafter, an example in which a store that sells food, daily necessities, medicines, and the like restricts entry into the store to store members who have completed a registration procedure in advance, will be described.

### [Outline of authentication system]

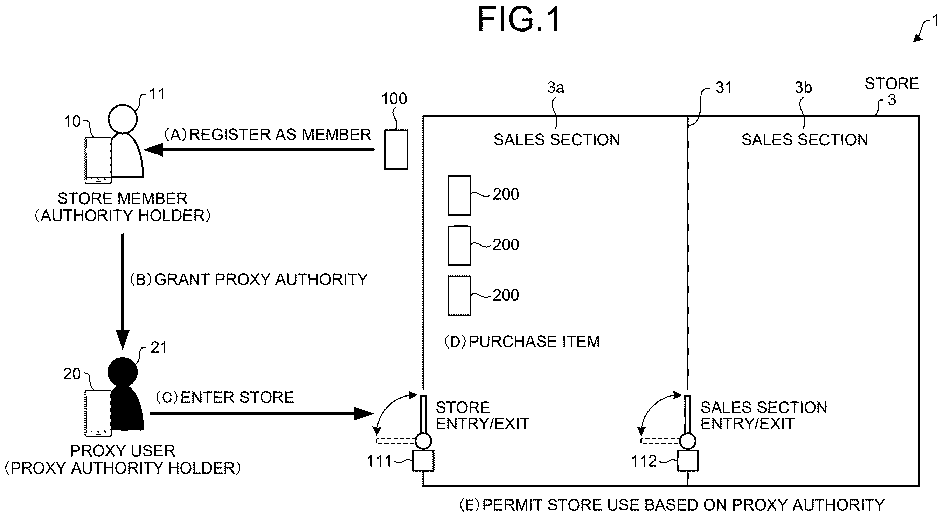

FIG. 1 is a schematic diagram illustrating outline of the authentication method and an authentication system 1 according to the present embodiment. The authentication system 1 includes a member terminal 10, a proxy user terminal 20, a store gate 111, a sales section gate 112, a management apparatus 100, and a checkout apparatus 200.

The management apparatus 100 manages the membership information of a store 3 and performs an authentication process for a member 11 and a proxy user 21 who enter the store 3. For example, a computer device including a control circuitry, a memory, and a communication unit is used as the management apparatus 100. A customer who has completed a membership registration procedure prescribed by the store 3 in advance is registered as the member 11 of the store 3 (A). The member 11 is a store member of the store 3, and is an authority holder who has authority to use the store 3.

The member terminal 10 is a communication terminal used by the member 11 of the store 3. For example, a smartphone possessed by the member 11 is used as the member terminal 10. The member 11 can enter the store 3 through the store gate 111 by using the member terminal 10 and can purchase an item sold in the store 3.

The store gate 111 installed at an entry/exit point of the store 3 includes a reading device that reads information from communication terminals such as the member terminal 10 and the proxy user terminal 20. Normally, the store gate 111 remains closed, and entry into the store 3 is not possible. The store gate 111 is configured to open and allow entry into the store 3 only when the customer is authenticated based on the information read by the reading device of the store gate 111. The store gate 111 is an exemplary entry restriction device that restricts entry into the store 3 to only members 11. Although FIG. 1 shows an example in which entry and exit are made through a single entry/exit point, the entrance and the exit may be separate, and the store gate 111 may be installed at each. Alternatively, the store 3 includes a plurality of entry/exit points, such as entrances, exits, and the like, and the store gate 111 may be installed at each of them to restrict the entry and exit of customers.

For example, the member 11 displays an authentication code in which authentication information including a membership number and a password is encoded, on the member terminal 10, and causes the reading device provided at the store gate 111 to read the authentication code. A graphical code such as a barcode or a two-dimensional code including authentication information and the like may be used as the authentication code. The management apparatus 100 performs the authentication process based on the authentication information read by the reading device of the store gate 111. Upon confirmation through the authentication process that the member 11 has been registered as a store member, the management apparatus 100 controls the store gate 111 such that the member 11 can enter the store. For example, the management apparatus 100 unlocks a lock mechanism that locks the door of the store gate 111 so that the door opens. It enables the member 11 to enter the store 3 through the store gate 111 and purchase an item sold inside the store 3. After the member 11 has passed through the store gate 111, the door of the store gate 111 is locked again.

The proxy user 21 is a user who uses the store 3 on behalf of the member 11. The proxy user terminal 20 is a communication terminal used by the proxy user 21. For example, a smartphone possessed by the proxy user 21 is used as the proxy user terminal 20. The proxy user 21 is not a member of the store 3. Thus, the proxy user 21 normally cannot enter the store 3 through the store gate 111.

The member 11 can grant proxy authority to the proxy user 21 to enable the proxy user 21 to enter the store 3 and purchase an item inside the store 3 (B). The proxy authority may be a temporary delegated authority granted to the proxy user 21. The granting of the proxy authority is performed by transmitting authority information indicating the proxy authority from the member terminal 10 to the proxy user terminal 20. The member 11 who is an authority holder grants proxy authority to the proxy user 21, so that the proxy user 21 becomes a proxy authority holder who can use the store 3 as a proxy for the member 11.

For example, the member 11 operates the member terminal 10 to request the management apparatus 100 to grant proxy authority. The management apparatus 100 issues authentication information for allowing temporary use of the store 3 and transmits the authentication information to the member terminal 10. For example, an authentication code in which the authentication information for allowing passage through the store gate 111 is encoded is transmitted from the management apparatus 100 to the member terminal 10. The member 11 grants proxy authority to the proxy user 21 by transmitting the authentication code received in the member terminal 10 to the proxy user terminal 20. Alternatively, the authentication code may be transmitted directly from the management apparatus 100 to the proxy user terminal 20. The authentication code may be generated at the member terminal 10 or the proxy user terminal 20 from the authentication information transmitted from the management apparatus 100.

The proxy user 21 can enter the store 3 using the proxy authority granted by the member 11 (C). The proxy user 21 can purchase an item sold in the store 3 (D).

For example, the proxy user 21 causes the reading device provided at the store gate 111 to read the authentication code received in the proxy user terminal 20 from the member terminal 10. The management apparatus 100 performs the authentication process using the authentication code acquired at the store gate 111. Upon confirmation through the authentication process that the proxy user 21 has proxy authority to use the store 3 on behalf of the member 11, the management apparatus 100 controls the store gate 111 such that the proxy user 21 can enter the store. Similar to a case where the member 11 enters the store, the door of the store gate 111 is temporarily unlocked, the proxy user 21 passes through the opened door, and then the door of the store gate 111 is closed and locked again. That is, the management apparatus 100 controls the opening and closing of the store gate 111 according to whether or not the proxy user 21 has entry authority into the store 3. The proxy user 21 who has entered the store through the store gate 111 can select an item in the store 3 and make the payment for the selected item at the checkout apparatus 200 to purchase it.

### [Restriction on store use based on proxy authority]

The management apparatus 100 permits the use of the store 3 by the proxy user 21, based on the details of the proxy authority granted to the proxy user 21 (E). In other words, the management apparatus 100 can restrict the use of the store 3 by the proxy user 21, based on the proxy authority.

The management apparatus 100 can restrict entry of the proxy user 21 to a sales section 3b that is a part of the store 3. For example, as shown in FIG. 1, in the store 3 including a plurality of sales sections 3a, 3b, the sales section gate 112 is installed to restrict certain customers from entering the sales section 3b. The sales section gate 112 is an exemplary entry restriction device that restricts entry into the sales section 3b. The management apparatus 100 controls the sales section gate 112 that restricts entry into the sales section 3b in the same manner as the store gate 111 that restricts entry into the store 3.

Specifically, the management apparatus 100 reads the authentication code from the proxy user terminal 20 via the reading device provided with the sales section gate 112, performs the authentication process using the authentication information included in the authentication code, and controls the sales section gate 112 based on the authentication result. The management apparatus 100 controls the opening and closing of the sales section gate 112 according to whether or not the proxy user 21 has entry authority into the sales section 3b. If the proxy user 21 is permitted to enter the sales section 3b, the sales section gate 112 opens. If the proxy user 21 is restricted from entering the sales section 3b, that is, if the proxy user 21 does not have authority to enter the sales section 3b, the sales section gate 112 does not open, and the proxy user 21 cannot enter the sales section 3b. The entry authority into the sales section 3b may be included in the information encoded in the authentication code, or the entry authority may be included in the information managed by the management apparatus 100 in association with the information encoded in the authentication code, so that the opening and closing of the sales section gate 112 can be controlled.

FIG. 1 shows an example in which the interior of the store 3 is divided into two sales sections, but the interior may be divided into three or more sales sections. The sales section may be located in a building different from the building of the store 3 including the store gate 111, or may be outdoors rather than inside the building. An entry restriction device may be provided for each sales section to restrict entry of customers into a corresponding sales section by opening and closing a bar or a door controlled based on the authority of the proxy user 21. The subject of entry restriction is not limited to the sales sections, and may include stores other than the store 3. For example, when another store such as a pharmacy is located inside the building of the store 3, a gate including the entry restriction device may be provided to restrict entry into this store. The entry restriction gate may be provided corresponding to each of a plurality of stores in the store building and controlled based on the authority of the proxy user 21 to open and close a bar or a door.

The management apparatus 100 can restrict the time period during which the proxy user 21 is allowed to enter the store 3 and/or the sales section 3b. The management apparatus 100 can restrict the time period, during which the proxy user 21 is allowed to pass through the store gate 111 and/or the sales section gate 112, corresponding to the authentication code in the proxy user terminal 20. For example, the time period may be restricted to weekdays from 1:00 p.m. to 3:00 p.m. The restricted time period may be set using at least one of a date, a day of the week, and a time.

The management apparatus 100 can set a deadline, by which the proxy user 21 is allowed to enter the store 3 and/or the sales section 3b, corresponding to the authentication code. The management apparatus 100 can set a usage deadline for the authentication code which allows passage through the store gate 111 and/or the sales section gate 112. The usage deadlines can be set separately for the store gate 111 and the sales section gate 112. For example, if the usage deadline is restricted to the date of issuance of the authentication code, the proxy user 21 cannot pass through the store gate 111 by using the authentication code on or after the day following the issuance date. For another example, if the usage deadline is restricted to three hours from the issuance of the authentication code, the proxy user 21 cannot pass through the store gate 111 by using the authentication code, after three hours have elapsed from the issuance. Similarly, the control based on a deadline can also be performed on the sales section gate 112.

The management apparatus 100 can restrict the number of times that the proxy user 21 is allowed to enter the store 3 and/or the sales section 3b. The management apparatus 100 can set an upper limit on the number of times that the authentication code can be used for authentication which allows passage through the store gate 111 and/or the sales section gate 112. The maximum number of times may be set separately for the store gate 111 and the sales section gate 112. For example, when the number of times that the store 3 can be used is restricted to one, the proxy user 21 can pass through the store gate 111 only once by using the authentication code, and after exiting the store 3, the proxy user 21 cannot enter the store again. When the number of times of use is limited to two, the proxy user 21 having exited the store 3 can enter the store 3 again through the store gate 111 by using the same authentication code, but cannot enter for the third time. Similarly, for the sales section 3b, the number of entries into the sales section 3b is also restricted by using the sales section gate 112.

The management apparatus 100 can restrict the stay time (time period) during which the proxy user 21 is allowed to stay in the store 3 and/or the sales section 3b. For example, when the stay time is set to two hours, the proxy user 21 can purchase items sold in the store and/or the sales section 3b for two hours after entering. For example, the proxy user 21 cannot purchase the items unless a checkout process for the items is started or completed within two hours.

The restriction on stay time may be applied by the management apparatus 100 in coordination with the checkout apparatus 200. For example, upon reading the authentication code from the proxy user terminal 20 at the store gate 111, the management apparatus 100 records the store-entry time of the proxy user 21. At the start of the checkout process, the reading device provided in the checkout apparatus 200 reads the authentication code from the proxy user terminal 20 to transmit to the management apparatus 100. The management apparatus 100 calculates the elapsed time from when the proxy user 21 entered the store, based on the store-entry time recorded in association with the authentication code received from the checkout apparatus 200. The management apparatus 100 controls the checkout apparatus 200 based on the calculated time. Specifically, the checkout apparatus 200 accepts the payment for the item from the proxy user 21 on condition that the calculated time by the management apparatus 100 does not exceed a threshold set for the stay time (e.g., two hours). In other words, if the stay time of the proxy user 21 exceeds the time period set in advance as the threshold, the proxy user 21 can neither perform the checkout process with the checkout apparatus 200 nor purchase the item. The management apparatus 100 may control the checkout apparatus 200 to accept the payment on condition that the transaction with the proxy user 21 is completed within the stay time. In a case where the stay time is restricted for the sales section 3b, the purchase of items sold in the sales section 3b may be restricted according to the stay time in the same manner. The management apparatus 100 may manage an entry time into each sales section, and identify the sales section corresponding to the item to be purchased by the proxy user 21 based on information acquired for checkout by the checkout apparatus 200. Then, the management apparatus 100 may restrict the purchase of this item based on the time period elapsed from the entry to the identified sales section and a threshold set in advance for the stay time in this sales section.

The management apparatus 100 can restrict the types and quantities of items that the proxy user 21 is allowed to purchase in the store 3 and/or the sales section 3b. At least one of the category, the type, the manufacturer, and the name of each item may be specified to restrict the items that can be purchased by the proxy user 21. For example, the category may be restricted to food; the type may be restricted to milk within the food category; the manufacturer of the milk may be restricted to Company A; or an item name may be restricted by selecting among the milk sold by Company A, thereby restricting the items that the proxy user 21 can purchase. Additionally, the quantity may be restricted to two bottles of milk or up to two bottles of milk, for example. That is, the quantity or the range of quantities of items that the proxy user 21 can purchase may be set in advance. The restriction on the quantity may be set using a fixed quantity, a maximum quantity, a minimum quantity, or a range of quantities.

The management apparatus 100 can restrict the amount of money that the proxy user 21 is allowed to spend on items in the store 3. For example, the management apparatus 100 may restrict the total amount that the proxy user 21 is allowed to spend to purchase items. The management apparatus 100 can not only restrict the amount allowed for a single purchase, but also specify a time period such as one day, one week, one month, or one year, thereby restricting the amount allowed to be spent during the specified time period. The management apparatus 100 may restrict the monetary amount for each item and/or each type of item. For example, the price of milk or the milk of Company A that the proxy user 21 is allowed to purchase may be restricted up to 300 JPY. The restriction on the monetary amount may be set using a fixed amount, a maximum amount, a minimum amount, or a range of amounts.

The restriction on the types and amounts of items may be performed by the management apparatus 100 in coordination with the checkout apparatus 200. For example, when checking out at the checkout counter in the store 3, the proxy user 21 registers information on an item in the checkout apparatus 200, thereby identifying the category, the type, the manufacturer, the name, the quantity, and the amount of the item to be purchased by the proxy user 21. The management apparatus 100 acquires the information identified by the checkout apparatus 200 and applies each of the above-described restrictions. For example, when a restriction is set for a specific time period, such as the upper limit of the transaction amount per day, the management apparatus 100 may apply the restriction by managing the transaction history of the proxy user 21 and calculating the cumulative monetary amount during that period. If the item or the amount does not meet the restriction, the management apparatus 100 may display information indicating this fact on the screen of the checkout apparatus 200 to inform the clerk and/or the proxy user 21. Information instructing the clerk and/or the proxy user 21 to change the item to be purchased may be displayed on the screen. The checkout apparatus 200 or the management apparatus 100 may notify a clerk via a terminal or the like possessed by the clerk that the monetary amount and/or type of item does not meet the restriction, so that the clerk can assist the proxy user 21 to comply with the restriction.

Restrictions for the proxy user 21 including the restriction relevant to entry into the store or the sales section, the restriction relevant to stay time in the store or the sales section, the restriction relevant to items to be purchased, the restriction relevant to monetary amounts of the items, and the like may be set by the member 11 who grants proxy authority to the proxy user 21. Alternatively, the restrictions may be set by the store 3. If the store 3 wishes to restrict the use of the store 3 and/or the sales section 3b by the proxy user 21, the store 3 prepares a setting corresponding to the above-described restrictions in advance. Then, the management apparatus 100 performs restrictions on the use by the proxy user 21, based on the setting prepared by the store 3. If the member 11 wishes to restrict the use of the store 3 and/or the sales section 3b by the proxy user 21, the member 11 prepares the usage conditions corresponding to the above-described restrictions in advance, and the management apparatus 100 performs restrictions on the use by the proxy user 21, based on the usage conditions.

### [Specific example of authentication system]

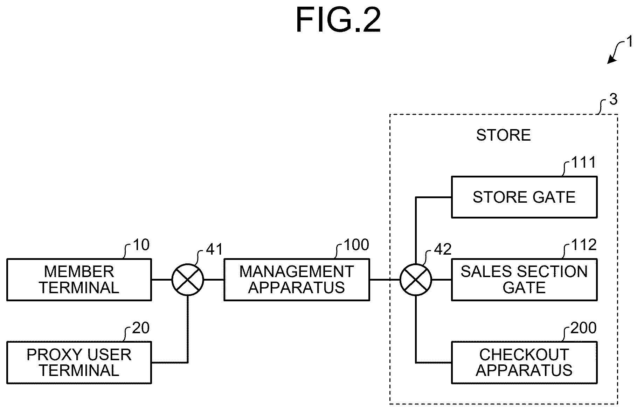

FIG. 2 is a block diagram showing an example of the configuration of the authentication system 1. Although FIG. 2 shows one store gate 111, one sales section gate 112, and one checkout apparatus 200, the number of each of them is not particularly limited. A plurality of the store gates 111, sales section gates 112, and checkout apparatuses 200 may be installed depending on the scale of the store 3.

The management apparatus 100 is connected via a network 42 of the store 3 so as to be able to communicate with the store gate 111, the sales section gate 112, and the checkout apparatus 200. The management apparatus 100 can communicate with the member terminal 10 and the proxy user terminal 20 via a public line 41 such as the Internet.

The management apparatus 100 may be configured by a computer device as described above. Alternatively, the management apparatus 100 may be configured by using a cloud server, or a plurality of computer devices that work in coordination.

The configurations of the member terminal 10 and the proxy user terminal 20 are not particularly limited as long as these terminals 10, 20 can transmit and receive information and display an authentication code. Smartphones may be used as the member terminal 10 and the proxy user terminal 20 as described above. A dedicated communication terminal other than a smartphone may be used as the member terminal 10 and the proxy user terminal 20.

The store gate 111 and the sales section gate 112 are entry restriction devices whose opening and closing are controlled by the management apparatus 100, thereby restricting customer's entry into the store and the sales section. For example, a drive device such as a motor controlled by the management apparatus 100 opens and closes the doors of each gate, thereby restricting the passage of the customer. Alternatively, the management apparatus 100 may restrict the passage of customers by controlling the locking and unlocking of a lock device of each door and the doors may be manually opened and closed by customers.

The checkout apparatus 200 may include an operation unit, a display, a control circuitry, a memory, and a communication unit. The checkout apparatus 200 accepts the registration of information on an item to be purchased by the customer in the store 3, and calculates the transaction amount between the customer and the store 3. For example, a POS register is used as the checkout apparatus 200. The POS register serving as the checkout apparatus 200 may perform the registration of information on the items and the calculation of the transaction amount in coordination with a POS server using a known conventional method.

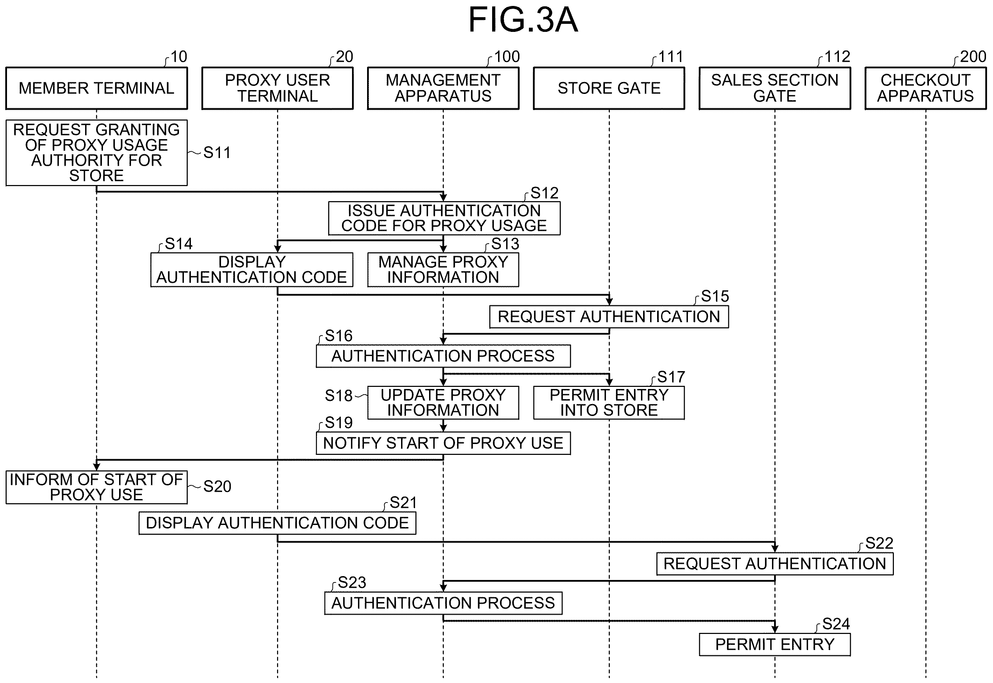

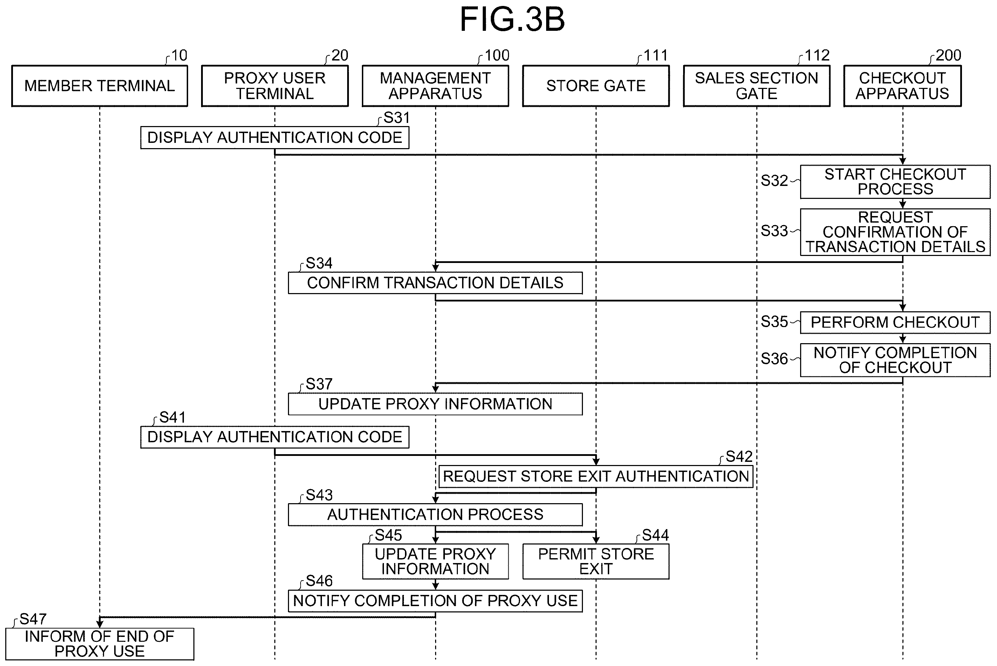

FIGS. 3A and 3B are flowcharts showing an example of the processing flow performed in the authentication system 1. A member 11 of the store 3, who wishes to ask a proxy user 21 to shop in the store 3, operates the member terminal 10 to request the management apparatus 100 to grant proxy usage authority for the store 3 (step S11).

Upon receiving the request from the member terminal 10, the management apparatus 100 issues an authentication code for proxy usage (step S12). The authentication code is code information, such as a password, composed of characters and/or numbers. The authentication code is authentication information exclusively for the proxy user 21. The authentication code is issued separately from the authentication information that is used by the member 11 when the member 11 enters the store 3. That is, the authentication information is newly issued for the proxy user 21 and is different from the authentication information that has been previously issued for the member 11 and is being used by the member 11. The management apparatus 100 issues the authentication code in order to allow the proxy user 21 to use the store 3 temporarily. Once the proxy user 21 finishes using the store 3, the authentication code becomes invalid and cannot be used again for the store 3.

The management apparatus 100 registers and manages the issued authentication code in a memory inside the apparatus 100 (step S13). The management apparatus 100 manages proxy information related to the proxy user 21 who uses the store 3 as a proxy for the member 11. The proxy information includes proxy user information 110, usage information 120, and usage history 130.

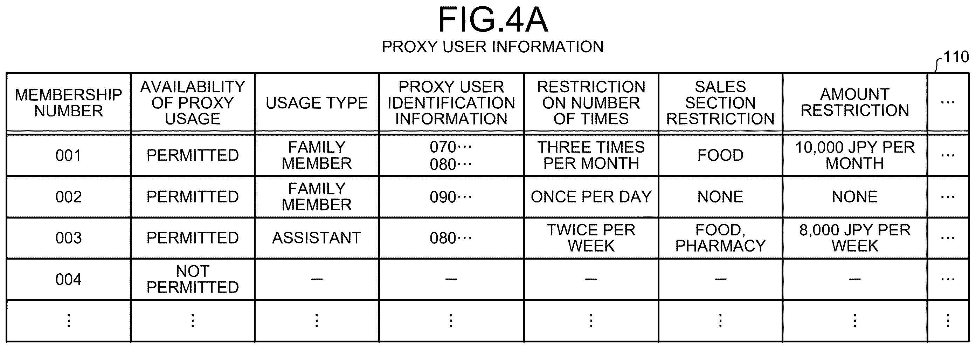

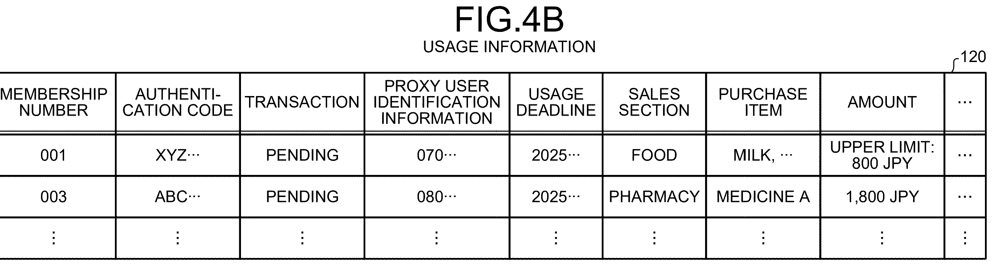

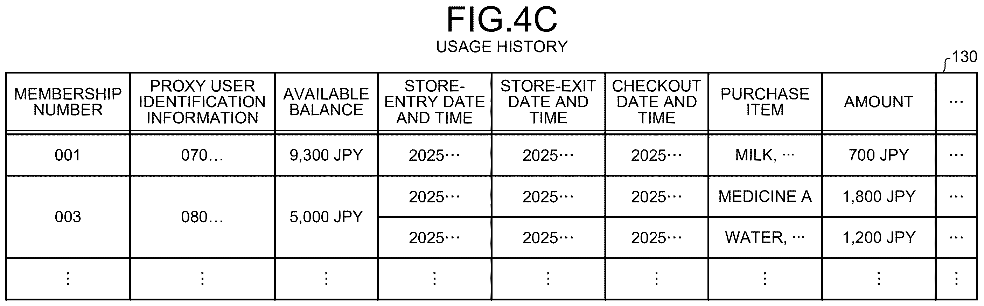

FIGS. 4A to 4C show examples of the proxy information managed by the management apparatus 100. The management apparatus 100 manages membership information that includes the membership number of each member 11 of the store 3 and the authentication information to be used for authentication of each member 11. The membership information may be managed in a similar manner to that of conventional membership-based stores. In addition to the membership information, the management apparatus 100 manages the proxy user information 110 shown in FIG. 4A, the usage information 120 shown in FIG. 4B, and the usage history 130 shown in FIG. 4C.

As shown in FIG. 4A, information on the proxy user 21, which is set for each member 11, is registered in the proxy user information 110. In an example shown in FIG. 4A, the proxy user information 110 includes a membership number, availability of proxy usage, a usage type, proxy user identification information, a restriction on the number of times, a sales section restriction, and an amount restriction. The membership number is an identification number assigned by the store 3 to each member 11 of the store 3.

The availability of proxy usage is information indicating whether or not the use of the store 3 by the proxy user 21 is permitted to the member 11. In the example shown in FIG. 4A, for each of the members 11 having membership numbers "001" to "003", the use of the store 3 by the proxy user 21 is permitted, whereas for the member 11 having a membership number "004", the use of the store 3 by the proxy user 21 is not permitted. For example, the store 3 may permit the proxy user 21 to use the store 3 only for some elite members 11 based on usage frequency and/or a cumulative past transaction amount. The store 3 may permit the proxy user 21 only for members 11 who have paid a fee for proxy usage. The availability of proxy usage may be set for such cases permitted by the store 3. The member 11 may be allowed to select whether to register the proxy user 21 or not, and the availability of proxy usage may be set based on the selection by the member 11.

The usage type is information indicating the type of the proxy user 21. In the example shown in FIG. 4A, for the members 11 having the membership numbers "001" and "002", family members are set as proxy users 21. For the member 11 having the membership number "003", an assistant is set as a proxy user 21. Examples of the assistant include a person who uses the store 3 on behalf of an elderly member 11 or a member 11 with physical disabilities.

The proxy user identification information is information for identifying each proxy user 21 registered in the "usage type" field. In the example shown in FIG. 4A, the telephone number of the smartphone which is the proxy user terminal 20 possessed by each proxy user 21 is used as the proxy user identification information. The usage type and the proxy user identification information may be set when the store 3 or the member 11 wishes to restrict the proxy user 21 who uses the store 3 on behalf of the member 11. When neither the store 3 nor the member 11 restricts the proxy user 21, information indicating an unrestricted status may be registered in the "usage type" and "proxy user identification information" fields.

The restriction on the number of times is information for restricting the number of times that the proxy user 21 is allowed to use the store 3. In the example shown in FIG. 4A, for the member 11 having the membership number "001", the number of times that the proxy user 21 is allowed to use the store 3 is restricted to three times per month; for the member 11 having the membership number "002", the number is restricted to once per day; and for the member 11 having the membership number "003", the number is restricted to twice per week. The restriction on the number of times may be set when the store 3 or the member 11 wishes to restrict the number of times that the proxy user 21 is allowed to use the store 3 on behalf of the member 11. The number of times can be set in association with a time period as shown in the examples. If there is no restriction on the number of times, "none" is registered in the "restriction on number of times" field.

The sales section restriction is information for restricting the sales sections that the proxy user 21 is allowed to use in the store 3. In the example shown in FIG. 4A, for the member 11 having the membership number "001", the sales section allowed to be used by the proxy user 21 is restricted to a food section, and for the member 11 having the membership number "003", the sales section to be used by the proxy user 21 is restricted to a food section and a pharmacy. On the other hand, for the member 11 having the membership number "002", there is no restriction on the sales sections. The sales section restriction may be set when the store 3 or the member 11 wishes to restrict the sales sections in the store 3 that the proxy user 21 uses.

The amount restriction is information for restricting the total amount of money that the proxy user 21 can spend on items in the store 3. In the example shown in FIG. 4A, for the member 11 having the membership number "001", the upper limit of the purchase amount for items by the proxy user 21 is set to 10,000 JPY per month, and for the member 11 having the membership number "003", the upper limit is set to 8,000 JPY per week. On the other hand, for the member 11 having the membership number "002", there is no restriction on the amount. The amount restriction may be set when the store 3 or the member 11 wishes to restrict the amount. The monetary amount can be set in association with a time period as shown in the examples.

FIGS. 4A to 4C show only some of the various usage restrictions described with reference to FIG. 1. Other restrictions may be set in the proxy user information 110 and/or the usage information 120. For example, the time period during which the proxy user 21 is allowed to enter the store and/or the sales section, the deadline to enter the store and/or the sales section, the stay time allowed to stay in the store or the sales section, the types of items allowed to purchase, etc.

When the member 11 operates the member terminal 10 to request the management apparatus 100 to grant proxy authority in step S11 in FIG. 3A, the member 11 can specify the usage details of the store 3 by the proxy user 21 within the scope of the proxy user information 110 shown in FIG. 4A, which is set in advance. For example, the member 11 having the membership number "001" can designate a proxy user 21 who will use the store 3 for this occasion, by specifying one of multiple pieces of proxy user identification information registered in the "proxy user identification information" field. In addition, within the range of monetary amount set in the "amount restriction" field, it is possible to specify the total amount and/or the range of amounts of money that the proxy user 21 who will use the store 3 for this occasion can spend on items. Instead of or in addition to the mode in which the usage details are specified within the scope of the proxy user information 110 shown in FIG. 4A, the proxy user information 110 shown in FIG. 4A may be used as an initial setting, and it may be allowed for the member 11 to specify usage details not included in the proxy user information 110 set in advance.

After accepting the operation by the member 11, the management apparatus 100 registers information on the use of the store by the proxy user 21 specified by the member 11 in the usage information 120 shown in FIG. 4B. The information to be registered and managed by the management apparatus 100 includes details of the specification by the member 11 and the authentication code issued in step S12 in FIG. 3A. The authentication code issued by the management apparatus 100 in step S12 is registered in the "authentication code" field shown in FIG. 4B. The information is managed in association with the membership number of the member 11.

Information registered in the "transaction" field in the usage information 120 shown in FIG. 4B indicates whether or not the proxy user 21 has completed the use of the store 3. When the proxy user 21 has purchased an item and has completed the checkout process in the store 3, the information in the "transaction" field is updated from "pending" to "completed".

An example in FIG. 4B shows that the member 11 having the membership number "001" has designated a proxy user 21 whose proxy user identification information is "070···", and has specified items including milk to be purchased at the food section within an amount equal to or less than 800 JPY. The example also shows that the member 11 having the membership number "003" has designated a proxy user 21 and has specified an item named "medicine A" to be purchased at a pharmacy for an amount of 1,800 JPY.

The restrictions specified in step S11 in FIG. 3A are given priority over the restrictions set in advance in the proxy user information 110 shown in FIG. 4A. For example, in the proxy user information 110 shown in FIG. 4A, the sales sections, in which the member 11 having the membership number "003" permits the proxy user 21 to shop, include a food section and a pharmacy. However, if this member 11 restricts the shopping to the pharmacy in step S11, the permitted sales sections are restricted to the pharmacy as shown in FIG. 4B. In this case, the proxy user 21 who has entered the store 3 using the authentication code shown in FIG. 4B is identified as a user designated by the member 11 having the membership number "003" based on the authentication code and cannot purchase any item in the food section. Furthermore, the item that this proxy user 21 can purchase at the pharmacy is also restricted to the "medicine A" priced at 1,800 JPY, based on the usage information 120 set in advance as shown in FIG. 4B.

Information in the "usage deadline" field shown in FIG. 4B indicates a deadline by which entry using the authentication code in the "authentication code" field into the store 3 is allowed. For example, in an initial setting, the usage deadline is set to the day on which the authentication code is issued. When the member 11 specifies the usage deadline in step S11, the usage deadline is changed from the initial setting to the specified usage deadline. For example, the member 11 can specify the usage deadline in the future, such as the following day or as the weekend.

After the proxy user 21 purchases an item in the store 3, the management apparatus 100 registers information in the usage history 130 shown in FIG. 4C. An example in FIG. 4C shows that the proxy user 21 who is designated by the member 11 having the membership number "001" and whose proxy user identification information is "070···" has purchased items including "milk" registered in the "purchased item" field for the amount of "700 JPY" registered in the "amount" field, on the date and time registered in the "checkout date and time" field, on behalf of the member 11 having the membership number "001". The upper limit amount is set to 10,000 JPY per month for this proxy user 21 in the proxy user information 110 shown in FIG. 4A. The example shown in FIG. 4C shows that the remaining amount available for this proxy user 21 to purchase items in the store 3 has become "9,300 JPY" registered in the "available balance" field. Similarly, the transaction history associated with past uses of the store 3 by the proxy user 21 designated by the member 11 having the membership number "003" has also been registered in the usage history 130 shown in FIG. 4C.

As shown in FIG. 3A, the management apparatus 100 issues an authentication code in step S12. In step S13, the management apparatus 100 registers the issued authentication code and details on the usage restriction, which have been specified by the member 11 using the member terminal 10 in step S11, in the usage information 120 shown in FIG. 4B. Subsequently, the management apparatus 100 transmits the issued authentication code to the proxy user terminal 20 of the proxy user 21. This enables the proxy user terminal 20 to display the authentication code such as a graphical code received from the management apparatus 100 on the screen (step S14).

The authentication code may be transmitted using MMS (Multimedia Messaging Service) to the telephone number registered in the proxy user identification information in the proxy user information 110 shown in FIG. 4A, for example. The authentication code may be transmitted via an application used in association with the telephone number. The application may be activated on the proxy user terminal 20 by using the telephone number, so that the issued authentication code can be transmitted to this terminal 20.

The management apparatus 100 transmits the authentication code using a messaging service or an application to the telephone number registered in advance in the proxy user information 110, or a telephone number specified by the member 11 from among multiple telephone numbers registered in the proxy user identification information. This enables the store 3 to restrict the proxy user 21, who is allowed to use the store 3 on behalf of the member 11, to a proxy user 21 having a proxy user terminal 20 whose telephone number has been registered in advance in the proxy user information 110. The method for granting the authentication code is merely an example, and as described with reference to FIG. 1, the authentication code may be transmitted from the management apparatus 100 to the member terminal 10 and then transmitted from the member terminal 10 to the proxy user terminal 20.

The proxy user 21 who visits the store 3 displays the authentication code on the screen of the proxy user terminal 20, and causes the reading device provided at the store gate 111 of the store entrance to read the authentication code in step S14 shown in FIG. 3A. The store gate 111 transmits the authentication code acquired from the proxy user terminal 20 to the management apparatus 100 and requests authentication (step S15).

The management apparatus 100 performs the authentication process for comparing the authentication code received from the store gate 111 with the authentication code registered in the usage information 120 shown in FIG. 4B (step S16). If the authentication succeeds, the management apparatus 100 opens the store gate 111 and permits the proxy user 21 to enter the store 3 (step S17). If the authentication fails, the store gate 111 does not open, and the proxy user 21 cannot enter the store 3. The authentication fails if the authentication code is not registered in the usage information 120 or if the authentication code is registered but the usage deadline has elapsed, for example.

The management apparatus 100 updates the proxy information shown in FIGS. 4A to 4C (step S18), when the proxy user 21 enters the store. Specifically, the management apparatus 100 registers the date and time when the proxy user 21 enters the store through the store gate 111, in the "store-entry date and time" field in the usage history 130 shown in FIG. 4C.

The management apparatus 100 notifies the member 11 corresponding to the proxy user 21 who has entered the store 3 of the start of the use of the store 3 by the proxy user 21 designated by the member 11 (step S19). The member terminal 10 receives the notification to inform the member 11 that the proxy user 21 has entered the store 3 (step S20). Since the member 11 can know the arrival of the proxy user 21 at the store 3, the member 11 can prepare for inquiries from the store 3 or the proxy user 21. The member 11 can restrict, for the designated proxy user 21, the store-entry time and/or the stay time as described with reference to FIG. 1, depending on the available waiting time in preparation for the inquiries.

In a case where the store 3 is divided into a plurality of sales sections 3a, 3b as shown in FIG. 1 and the proxy user 21 needs to purchase an item in the sales section 3b, the proxy user 21 displays the authentication code on the screen of the proxy user terminal 20 and causes the reading device provided at the sales section gate 112 of the sales section entrance to read the authentication code (step S21). The sales section gate 112 transmits the authentication code acquired from the proxy user terminal 20 to the management apparatus 100 and requests authentication (step S22).

The management apparatus 100 performs the authentication process for confirming whether the proxy user 21 is permitted to enter the sales section 3b by referring to the usage information 120 shown in FIG. 4B, based on the authentication code received from the sales section gate 112 (step S23). The management apparatus 100 confirms whether the authentication code is registered in the usage information 120 and information indicating the sales section 3b is registered in the "sales section" field in the usage information 120.

If the authentication succeeds, the management apparatus 100 opens the sales section gate 112 and permits the proxy user 21 to enter the sales section 3b (step S24). If the authentication fails, that is, if the use of the sales section 3b is not permitted to the proxy user 21, the sales section gate 112 does not open, and the proxy user 21 cannot enter the sales section 3b.

The proxy user 21 moves to the checkout counter with an item to be purchased. When the proxy user 21 displays the authentication code on the screen of the proxy user terminal 20 and causes the reading device provided in the checkout apparatus 200 to read the authentication code (step S31), the checkout apparatus 200 starts the checkout process (step S32).

In order to confirm whether there is no problem with the item to be purchased and the monetary amount to be spent by the proxy user 21, the checkout apparatus 200 requests the management apparatus 100 to confirm transaction details (step S33). The checkout apparatus 200 transmits the authentication code acquired from the proxy user terminal 20 and the transaction details to the management apparatus 100. The management apparatus 100 confirms whether there is no problem with the transaction details by referring to the usage information 120 shown in FIG. 4B, based on the authentication code received from the checkout apparatus 200.

Upon confirmation that there is no problem with the transaction details, the management apparatus 100 controls the checkout apparatus 200 to perform the checkout process for the price of the item, that is, the transaction amount for purchasing the item (step S35). In step S34, if the item that the proxy user 21 purchases does not meet the restriction on the permitted purchase item set in the usage information 120, or if the transaction amount for purchasing the item does not meet the restriction on the permitted amount set in the usage information 120, the management apparatus 100 informs the proxy user 21 of this fact via the screen of the checkout apparatus 200. In this case, the item to be purchased may be changed, which will be described later.

When the payment of the transaction amount has been made by electronic settlement, cash settlement, or the like, and the checkout process has been completed, the checkout apparatus 200 notifies the management apparatus 100 of the completion of the checkout (step S36). Upon receiving the notification, the management apparatus 100 updates the proxy information shown in FIGS. 4A to 4C (step S37).

Specifically, when the proxy user 21 corresponding to the membership number "001" shown in FIG. 4B purchases milk and the like in the food section of the store 3 by paying 700 JPY to complete the transaction, the "transaction" field is updated from "pending" to "completed" after completing the checkout process, for example. Additionally, in the usage history 130 shown in FIG. 4C, information is registered in the "checkout date and time", "purchased item", and "amount" fields corresponding to the membership number "001", and the available amount is updated in the "available balance" field.

The proxy user 21 who exits the store after purchasing items displays the authentication code on the screen of the proxy user terminal 20 and causes the reading device provided at the store gate 111 of the store entrance to read the authentication code (step S41 shown in FIG. 3B). The store gate 111 transmits the authentication code acquired from the proxy user terminal 20 to the management apparatus 100 and requests authentication (step S42).

The management apparatus 100 performs the authentication process for comparing the authentication code received from the store gate 111 with the authentication code registered in the usage information 120 shown in FIG. 4B (step S43). If the authentication succeeds, the management apparatus 100 opens the store gate 111 and permits the proxy user 21 to exit the store 3 (step S44). Alternatively, at the time of exit, the store gate 111 may be opened on condition that the authentication code has been read, without performing the authentication process. When the authentication fails, the management apparatus 100 may not open the store gate 111 and inform a clerk of this fact to handle this issue, or may open the store gate while recording this fact so that this issue can be handled later.

The management apparatus 100 updates the proxy information shown in FIGS. 4A to 4C, when the proxy user 21 exits the store (step S45). Specifically, the management apparatus 100 registers the date and time when the proxy user 21 exits the store through the store gate 111, in the "store-exit date and time" field in the usage history 130 shown in FIG. 4C.

The management apparatus 100 notifies the member 11 of the completion of the use of the store 3 by the proxy user 21 (step S46). The member terminal 10 receives the notification to inform the member 11 that the proxy user 21 has exited the store 3 (step S47). The member 11 who has been waiting in preparation for inquiries from the store 3 or the proxy user 21 can end the waiting based on the notification.

### [Granting of proxy authority]

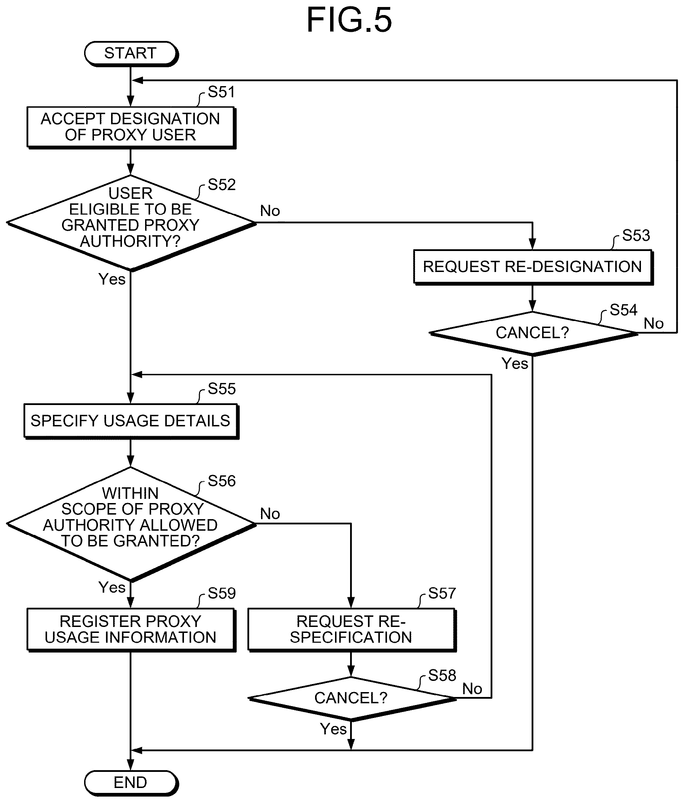

FIG. 5 is a flowchart showing an example of the processing flow performed when the member 11 grants proxy authority to the proxy user 21. For example, the process shown in FIG. 5 starts in step S11 shown in FIG. 3A. The management apparatus 100 accepts an operation in which the member 11 designates the proxy user 21, via the member terminal 10 (step S51).

The management apparatus 100 determines whether or not the proxy user 21 designated by the member 11 is an entity eligible to be granted proxy authority (step S52). For example, if the proxy user 21 corresponds to the proxy user identification information registered in the proxy user information 110 shown in FIG. 4A in association with the membership number of the member 11 operating the member terminal 10, the management apparatus 100 determines that the proxy authority can be granted as operated by the member 11.

If the proxy user 21 is not an entity eligible to be granted proxy authority (step S52; No), the management apparatus 100 requests the member 11 to designate another proxy user 21 (step S53). If the member 11 cancels the process for granting proxy authority here (step S54; Yes), the process ends. If the member 11 does not cancel (step S54; No) and designates another proxy user 21, the process returns to step S51.

If the proxy authority can be granted to the proxy user 21 designated by the member 11 (step S52; Yes), the management apparatus 100 accepts an operation by the member 11 to specify the usage details of the store 3 by the designated proxy user 21, via the member terminal 10 (step S55).

The management apparatus 100 determines whether or not the details specified by the member 11 are within the scope of the proxy authority that can be granted to the proxy user 21 designated by the member 11 (step S56). For example, if the specified details meet the restriction details, such as the restriction on the number of times, the sales section restriction, and the amount restriction, registered in the proxy user information 110 shown in FIG. 4A in association with the membership number of the member 11, the management apparatus 100 determines that the specified details are within the scope of proxy authority that can be granted to the proxy user 21.

If the details specified by the member 11 exceeds the scope of authority that can be granted to the proxy user 21 (step S56; No), the management apparatus 100 requests re-specification from the member 11 (step S57). If the member 11 cancels the process for granting proxy authority here (step S58; Yes), the process ends. If the member 11 does not cancel (step S58; No) and re-specifies the usage details of the store 3, the process returns to step S55.

If the usage details specified by the member 11 are within the scope of authority that can be granted to the proxy user 21 (step S56; Yes), the management apparatus 100 registers the details specified by the member 11 in the usage information 120 shown in FIG. 4B (step S59), and the process ends. Then, the processes in step S12 and the subsequent steps shown in FIG. 3A are performed.

As described above, the member 11 operates the member terminal 10 to designate the proxy user 21 and specify the usage details of the store 3 by the designated proxy user 21. The management apparatus 100 checks the designated proxy user 21 and the specified usage details and may request the member 11 to change them based on the check result if necessary. Accordingly, the proxy authority can be set within the scope that meets the proxy user information 110 shown in FIG. 4A.

### [Restriction on transaction details]

In the example shown in FIG. 3B, the proxy user 21 starts the checkout process for items to be purchased, at the checkout counter and completes the registration of all information on the items in the checkout apparatus 200, and then, the management apparatus 100 confirms whether there is no problem with the registered transaction details. The method of checking the transaction details is not limited thereto, and the transaction details may be checked each time the proxy user 21 registers an item to be purchased, in the checkout apparatus 200. If the type, price, and the like of the item to be purchased by the proxy user 21 do not meet the transaction details permitted in advance to the proxy user 21 by the member 11, the management apparatus 100 may inquire of the member 11 whether to permit the purchase of the item or not. Hereinafter, a specific example will be described.

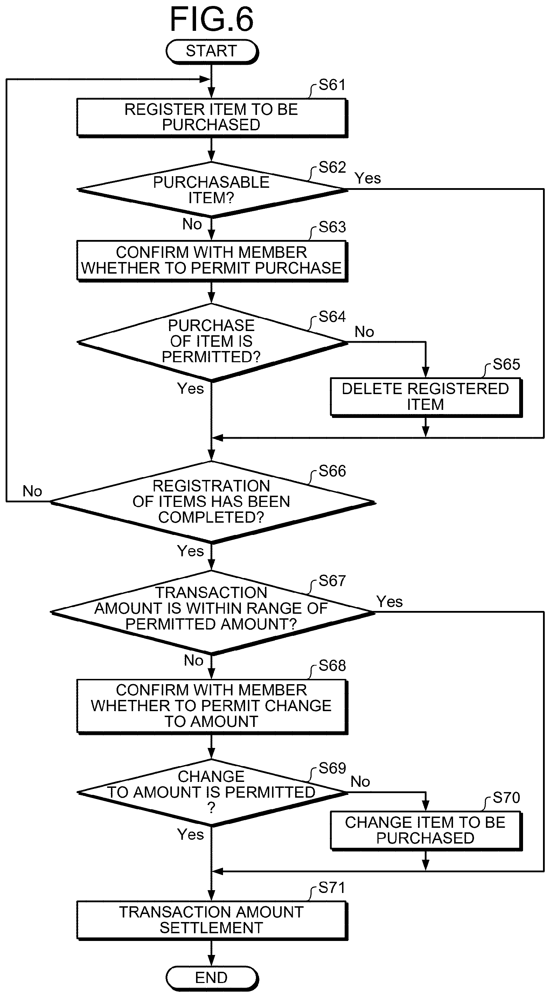

FIG. 6 is a flowchart showing an example of the processing flow performed at the time of the checkout process. As described in step S31 in FIG. 3B, before starting the checkout process, the proxy user 21 causes the checkout apparatus 200 to read the authentication code displayed on the proxy user terminal 20. The checkout apparatus 200 transmits the authentication code read from the proxy user terminal 20 to the management apparatus 100. The management apparatus 100 identifies various restriction information on the sales section, the purchase item, the amount, and the like, registered in association with the authentication code, in the usage information 120 shown in FIG. 4B. Then, the process shown in FIG. 6 starts.

The proxy user 21 who has started the checkout process registers the item to be purchased, in the checkout apparatus 200 (step S61). For example, as conventionally known, a scanner provided in the checkout apparatus 200 may be used to read a barcode attached to the item, thereby registering information on the item. The checkout apparatus 200 operating as a POS register may cooperate with a POS server to identify the category, the type, the manufacturer, the item name, the price, the sales section, and the like of each item, based on the information obtained from the barcode. The checkout apparatus 200 calculates the transaction amount based on the identified price and the quantity of registered items.

The management apparatus 100 determines whether or not the item registered by the proxy user 21 in the checkout apparatus 200 is an item that the proxy user 21 is permitted to purchase (step S62). The management apparatus 100 determines, based on the usage information 120 shown in FIG. 4B, whether or not the proxy user 21 is permitted to purchase the item. If the type and the price of the item meet the restrictions registered in the usage information 120 based on the instructions by the member 11, the management apparatus 100 determines that the proxy user 21 is permitted to purchase the item.

If the proxy user 21 is permitted to purchase the item registered in the checkout apparatus 200 (step S62; Yes), an operation for registering the next item (step S61) is repeatedly performed until the registration of all items to be purchased by the proxy user 21 is completed (step S66; No).

If the proxy user 21 is not permitted to purchase the item registered in the checkout apparatus 200 (step S62; No), the management apparatus 100 performs a process for confirming with the member 11, who granted the proxy authority to the proxy user 21, whether to permit the purchase of the item or not (step S63).

For example, the management apparatus 100 displays, on the screen of the member terminal 10 used by the member 11, a selection screen showing information on the item including the price of the item and information to prompt the member 11 to select whether to permit the purchase or not. The member 11 checks the screen display of the member terminal 10 and performs an operation of selecting whether to permit the purchase of the item or not.

If the member 11 permits the purchase of the item by operating the member terminal 10 (step S64; Yes), the checkout process continues while the permitted item is included in the items to be purchased by the proxy user 21. If any unregistered item remains (step S66; No), the operation of registering the next item is performed (step S61). If the registration of all items has been completed (step S66; Yes), the process proceeds to next step S67.

On the other hand, if the member 11 does not permit the purchase of the item (step S64; No), the management apparatus 100 deletes the item not permitted by the member 11 from the items to be purchased by the proxy user 21 (step S65).

In this case, the management apparatus 100 displays, on the screen of the checkout apparatus 200, information indicating that the member 11 does not permit the purchase of the item, and information instructing the proxy user 21 to remove the item not permitted by the member 11 from the items to be purchased. For example, the proxy user 21 places the item on a stand for canceled items prepared near the checkout apparatus 200, so that the item is removed from the purchase target. Alternatively, the management apparatus 100 may notify a clerk of the related information via a communication terminal possessed by the clerk, and the clerk may collect the item removed from the purchase target.

As described above, in a case where there is an item that is not specified in advance as the item to be purchased by the member 11, since the member 11 is allowed to select whether to permit the purchase of the item or not before payment of the transaction amount, it is possible to prevent unnecessary purchase of items by the proxy user 21. It can also enable the purchase of a substitute item by the proxy user 21 when the item specified in advance by the member 11 is unavailable in the store 3 or out of stock.

For example, in the store 3, when the proxy user 21 cannot purchase an item P specified by the member 11 and registered in the usage information 120, the proxy user 21 starts the checkout process while another item Q of the same type as the item P is included in the purchase target. During the checkout process, the management apparatus 100 requests the member 11 to confirm whether to permit the purchase of the item Q instead of the item P or not. The member 11 can determine whether to permit the purchase of the item Q or not after checking the information on the item Q including the price of the item Q displayed on the member terminal 10.

For example, there is a case where the proxy user 21 can purchase the item specified by the member 11 and registered in the usage information 120, but the selling price of the item is higher than the amount specified by the member 11 and registered in the usage information 120 for this item. In this case, the management apparatus 100 requests the member 11 to confirm whether to permit the purchase of the item or not in the same manner as that for the substitute item. The member 11 can determine whether to permit the purchase of the item or not after checking the information including the current price of the item displayed on the member terminal 10.

Until the registration of all items to be purchased by the proxy user 21 has been completed (step S66; No), a process for registering information on each item and requesting the member 11 to permit the purchase of the item as needed is repeatedly performed.

If the registration of all the items has been completed (step S66; Yes), and the transaction amount is obtained by summing the amounts of the items, the management apparatus 100 determines whether or not the transaction amount is within the range of amount permitted in advance by the member 11 (step S67).

For example, when the member 11 has specified an upper limit amount in the usage information 120 shown in FIG. 4B, the management apparatus 100 compares the amount specified by the member 11 with the transaction amount. If the transaction amount is equal to or less than the upper limit amount specified by the member 11 (step S67; Yes), the management apparatus 100 controls the checkout apparatus 200 to perform the settlement of the transaction amount through electronic settlement or cash settlement (step S71), and the process ends.

On the other hand, if the transaction amount exceeds the upper limit amount specified in advance by the member 11 (step S67; No), the management apparatus 100 performs a process for confirming with the member 11, who granted the proxy authority to the proxy user 21, whether to permit a change of the amount from the specified amount or not (step S68).

For example, the management apparatus 100 displays the information on each item including the price of each item, on the screen of the member terminal 10 used by the member 11. Additionally, the management apparatus 100 may display the transaction amount to purchase these items, the upper limit amount previously specified by the member 11, the difference between these amounts, and the like, on the screen to prompt the member 11 to select whether to permit a change to the transaction amount from the previously specified amount. That is, the management apparatus 100 request the member 11 to select whether to proceed with the transaction at the current transaction amount or not. The member 11 checks the information displayed on the member terminal 10 and performs the operation for selecting whether to permit the change to the amount or not.

If the member 11 permits the change to the amount (step S69; Yes), the settlement of the transaction amount is performed through electronic settlement or cash settlement (step S71), and the process ends. On the other hand, if the member 11 does not permit the change to the amount (step S69; No), the management apparatus 100 performs a process for changing the item to be purchased by the proxy user 21 (step S70). After the item is changed and the transaction amount becomes equal to or less than the amount specified in advance by the member 11, the management apparatus 100 controls the checkout apparatus 200 to perform the settlement with the transaction amount of the items after the change (step S71), and the process ends.

For example, after the selection operation for not permitting the change to the amount is performed on the member terminal 10, the management apparatus 100 displays the information on each currently registered item, the price of each item, the transaction amount, the amount permitted for the proxy user 21 by the member 11 in the usage information 120, and the like on the screen of the member terminal 10. The management apparatus 100 prompts the member 11 to change the item to be purchased by operating the member terminal 10. The member 11 checks the screen of the member terminal 10 and performs an operation for removing one or more items, and then performs an operation of finalizing the details of the purchase.

When the member 11 has changed the item to be purchased by operating the member terminal 10, the management apparatus 100 displays a screen informing the proxy user 21 of the changed details on the checkout apparatus 200. The management apparatus 100 may display, on the screen of the checkout apparatus 200, information indicating that the member 11 does not permit the change to the amount, information instructing the proxy user 21 to remove one or more items from the items to be purchased based on the selection by the member 11, and the like. For example, the proxy user 21 places one or more items canceled by the member 11 on the stand for canceled items installed near the checkout apparatus 200 to remove them from the purchase target. Alternatively, the management apparatus 100 may notify a clerk of the related information via a communication terminal possessed by the clerk, and the clerk may collect the item removed from the purchase target.

In the above example, the upper limit amount is set in the usage information 120. In a case where a fixed amount or a lower limit amount is set in the usage information 120, the necessary process is performed in a similar manner. Specifically, after comparing the transaction amount with the amount set in the usage information 120, the permission by the member 11 may be requested as necessary based on the comparison result, and the item to be purchased may be changed from the currently registered items based on the permission result.

In the above example, the item is deleted based on the decision by the member 11. However, the member 11 may replace the item that the proxy user 21 intends to purchase with another item. For example, the management apparatus 100 displays information on a substitute item and/or information on an item recommended for purchase by the store 3 on the screen of the member terminal 10. The member 11 cancels the currently registered item and selects a substitute item displayed on the member terminal 10. The management apparatus 100 removes the canceled item from the purchase target while adding the item selected by the member 11 to the purchase target instead of the canceled item. The checkout apparatus 200 proceeds with the checkout process for the items after the replacement by the member 11. When the item is replaced with another one, the management apparatus 100 may notify a clerk of the related information via a communication terminal possessed by the clerk, and the clerk may collect the canceled item, prepare the newly selected item and hand the same to the proxy user 21. One or more items may be cancelled by the member 11, and one or more substitute items may be selected by the member 11 for each canceled item.

In some cases, the determination is performed based on the total amount, which is the sum of the transaction amount of the current transaction and the transaction amounts of past transactions performed by the proxy user 21. In the amount restriction in the proxy user information 110 shown in FIG. 4A, an upper limit amount may be set, such as an upper limit amount per day, an upper limit amount per week, or an upper limit amount per month. In this case, the management apparatus 100 refers to the usage history 130 in FIG. 4C, calculates the total amount by summing the transaction amounts of past transactions and the transaction amount of the current transaction, and compares the total amount with the upper limit amount set in the proxy user information 110. If the total amount exceeds the upper limit amount, the member 11 is prompted to select whether to permit the change to the amount, and according to the selection of the member 11, the transaction continues as is, or continues after one or more items to be purchased are removed such that the total amount does not exceed the upper limit amount, in the same manner described above.

Each of apparatuses such as the management apparatus 100, the checkout apparatus 200, and the communication terminal 20 described in the present embodiment may be provided with a control circuitry and a memory inside the apparatus, and the functions and operations of each apparatus described above are realized by control performed by the control circuitry. For example, a program corresponding to the control circuitry is stored in advance in the memory or a dedicated storage device, and this program being executed by hardware such as a CPU realizes the functions and operations of the control circuitry. In addition, the functions and operations of the apparatus are realized by the control circuitry executing control based on information input and output using the operation unit and the display unit, information transmitted and received via the communication unit, information stored in the memory, and the like.

The authentication method and the authentication system according to the present disclosure can improve convenience for customers in a store that restricts entry to customers eligible for entry.

The functions and operations realized by the components described in the present embodiment may be realized by circuits or processing circuits, programmed so as to realize the functions and operations, including general-purpose processors, application specific processors, integrated circuits, ASICs (Application Specific Integrated Circuits), CPUs (Central Processing Units), conventional-type circuits, and/or a combination of these. The processor is regarded as a circuit or a processing circuit including a transistor and other circuit. The processor may be a processor that executes a program stored in a memory. The components described in the present embodiment are hardware that is programmed to realize the described functions or hardware that is configured to execute the functions. The hardware may be the hardware described in the present embodiment, or hardware that is programmed to realize or known to execute the described functions. When the hardware is a processor regarded as an example of a circuit, the components described in the present embodiment may be a combination of the hardware and software used by the hardware and/or the processor.

The conditions and information described in association with each apparatus in the present embodiment are illustrative, and some of the conditions and information may not necessarily be used, or other conditions or information may be used in place of the conditions and information described in the specific examples.

The configuration of the authentication system 1 described in the present embodiment is conceptually functional, and the configuration may not necessarily be physically limited thereto. Distributed or integrated forms of each device are not limited to the above-described forms, and all or some of the forms may be distributed or integrated functionally or physically in any unit depending on various loads, use statuses, or the like.

As described above, although the embodiment of the authentication system according to the present disclosure has been described with reference to the drawings, the configurations and operations of the authentication system and each device constituting the authentication system are not limited to the above embodiment, and may be carried out with various improvements, alterations, and modifications, based on the knowledge of those skilled in the art without departing from the spirit thereof.

## Claims

1. An authentication method performed by a management apparatus (100), for a facility that restricts users to authority holders who have been granted a predetermined authority in advance, the authentication method comprising:
storing identification information of a proxy authority holder in a memory, the identification information being assigned to a user who has been granted proxy authority to enter the facility as the proxy authority holder on behalf of the authority holder;
storing authentication information issued to the proxy authority holder for entering the facility in association with the identification information in the memory;
acquiring the authentication information from the proxy authority holder by an entry restriction device (111) provided for restricting entry into the facility;
performing an authentication process for the proxy authority holder based on the authentication information acquired by the entry restriction device (111); and
controlling the entry restriction device (111) based on a result of the authentication process.

2. The authentication method according to claim 1, further comprising:
storing a usage condition set by the authority holder for the proxy authority holder using the facility in association with the authentication information in the memory; and
restricting use of the facility by the proxy authority holder based on the usage condition.

3. The authentication method according to claim 2, further comprising
controlling the entry restriction device (111) to restrict the entry of the proxy authority holder into the facility, based on information included in the usage condition for restricting a number of times that the proxy authority holder is allowed to enter the facility, and the authentication information acquired by the entry restriction device (111).

4. The authentication method according to claim 2, further comprising
controlling another entry restriction device (112) to restrict an entry of the proxy authority holder into an area provided in the facility, based on information included in the usage condition for restricting an area into which the authority holder is allowed to enter among a plurality of areas provided in the facility, and the authentication information of the proxy authority holder acquired by the another entry restriction device (112).

5. The authentication method according to claim 2, further comprising
controlling another entry restriction device (112) to restrict an entry of the proxy authority holder into a store provided in the facility, based on information included in the usage condition for restricting a store into which the authority holder is allowed to enter among a plurality of stores provided in the facility, and the authentication information of the proxy authority holder acquired by the another entry restriction device (112).

6. The authentication method according to claim 2, further comprising:
acquiring information on an amount to be settled by the proxy authority holder from a checkout apparatus (200) in the facility;
determining whether or not the amount to be settled by the proxy authority holder meets a restriction on an amount set in the usage condition, based on information included in the usage condition for restricting an amount that the proxy authority holder is allowed to settle in the facility; and
controlling the checkout apparatus (200) based on a result of the determination.

7. The authentication method according to claim 2, further comprising:
acquiring information on an item to be purchased by the proxy authority holder from a checkout apparatus (200) in the facility;
determining whether or not the item to be purchased by the proxy authority holder meets a restriction on an item set in the usage condition, based on information included in the usage condition for restricting items that the proxy authority holder is allowed to purchase in the facility; and
controlling the checkout apparatus (200) based on a result of the determination.

8. An authentication system that performs user authentication for a facility that restricts users to authority holders who have been granted a predetermined authority in advance, the authentication system comprising:
a memory configured to store identification information in association with authentication information, the identification information being assigned to a user who has been granted proxy authority to enter the facility as the proxy authority holder on behalf of the authority holder, the authentication information being issued to the proxy authority holder for entering the facility; and
a control circuitry configured to perform an authentication process for the proxy authority holder, based on the authentication information acquired from the proxy authority holder by an entry restriction device (111) provided for restricting entry into the facility, and to control the entry restriction device (111) based on a result of the authentication process.
